# EUROPEAN PATENT SPECIFICATION

(11) **EP 1 139 080 B1**
(45) Date of publication and mention of the grant of the patent: **10.08.2005**
(21) Application number: 01107727.8
(22) Date of filing: 30.03.2001
(51) Int. Cl.: G01J 5/02, G01J 5/08, G01J 5/04

(54) **Ceramic infrared sensor**
Keramischer Infrarotsensor
Senseur infrarouge céramique

(30) Priority: 31.03.2000 JP 2000097667
(43) Date of publication of application: 04.10.2001
(73) Proprietor: Sumitomo Electric Industries, Ltd., Osaka-shi, Osaka 541-0041 (JP)
(72) Inventor: Hasegawa, Masato, Sumitomo Electric Industries Ltd, Itami-shi, Hyogo (JP); Kakimoto, Masaya, Sumitomo Electric Industries Ltd, Osaka-shi, Osaka (JP)
(74) Representative: HOFFMANN - EITLE

(56) References cited:
- EP-A- 0 425 229
- EP-A- 0 440 112
- US-A- 4 795 908
- US-A- 5 173 443
- US-A- 5 783 624
- PATENT ABSTRACTS OF JAPAN vol. 1996, no. 06, 28 June 1996 (1996-06-28) & JP 08 054478 A (TAKENAKA ENG KK), 27 February 1996 (1996-02-27)
- PATENT ABSTRACTS OF JAPAN vol. 010, no. 015 (P-422), 21 January 1986 (1986-01-21) & JP 60 170803 A (YOSHIMURA KOUGAKU KK), 4 September 1985 (1985-09-04)

## Description

### Background of the invention

### Field of the Invention

This invention concerns a ceramic infrared sensor that detects infrared rays.

### Description of the Related Art

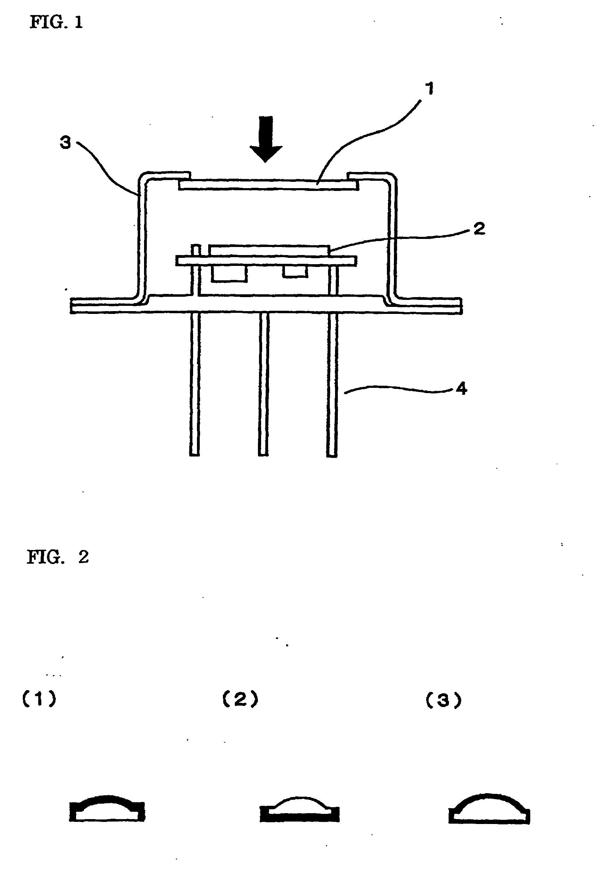

So-called infrared sensors, which are arranged as a combination of a light receiving part (lens body), which includes a window material for infrared rays, and a detection part, which detects the light that has been received, have priorly been used upon being cooled by liquid nitrogen or other coolant to a low, operable temperature (such sensors shall hereinafter be referred to as "cooled infrared sensors"). However, in recent years, non-cooled type infrared sensors (hereinafter referred to simply as "non-cooled sensors") have appeared which use a pyroelectric or thermocouple type light receiving part and do not require cooling. Due to their ease of use, non-cooled sensors are becoming the mainstream. When drawn schematically, such a non-cooled sensor generally has the basic structure shown in Fig. 1. In Fig. 1, 1 is the lens body, which is the light receiving part, 2 is the detection part, 3 is the supporting part for the lens body, and 4 indicates output terminals. When light that has been emitted from a detected object enters the lens body from the direction of the arrow at the upper part of the Figure, lens body 1 transmits only the infrared rays of the desired wavelength band. The optical signals of the transmitted infrared rays are detected by detection part 2 and sent out via terminal 4 upon conversion into electrical signals.

Conventionally, inorganic materials, such as Ge, Si, and ZnS, have been used as materials for lenses. However, resins, such as polyethylene, which are inexpensive and excellent in processability, have also come in to use recently. Depending on the conditions of use, the former inorganic materials were inadequate in terms of mechanical strength, surface hardness, and surface oxidation, etc. due to ultraviolet rays when used solitarily in applications in which the materials are exposed to severe usage environments, for example in equipment that is used outdoors and equipment installed in vehicles that receive vibration and impact. The coating of an environment-resistant film was thus tried in such cases. For example, Japanese Unexamined Patent Publication No. Sho-56-87002 introduces the coating of the surface of the lens with a diamond-like carbon film that transmits infrared rays. However, the costs are high with this method.

Meanwhile, when the lens body is made of resin, there is unavoidable lowering of not only the heat resistance but of the mechanical strength of the lens as a whole in comparison to inorganic materials. For example, though the overall thickness must be made thin in order to increase transmittance, the lowering of mechanical strength cannot be avoided.

Such lens materials normally transmit light of a wide wavelength range from visible light to infrared light. Thus, for example, in cases where the infrared rays of a wavelength range of 8 to 12 *µ* m, which are emitted from the human body surface, are to be detected, the light of different wavelength range outside that which is to be selectively detected, in particular, the visible light, becomes noise. As a result, erroneous operation occurs in the signal processing part subsequent to the detection part and the precision of detection is lowered by the raised background.

Conventionally, in order to cut such noise, a filter layer with this cutting function was formed on the surface of the lens body. However, this layer was formed by a gas-phase vapor deposition method, such as the sputtering method, vacuum vapor deposition method, or CVD method, which resulted in the problem of increased production cost. The development of a light receiving part (lens body), with which the lowering of transmittance of infrared light of the desired wavelength band is restrained as much as possible and which has the function of shielding visible light definitely and can be produced readily, has thus been desired.

With regard to the shielding of visible light, a means with which particles are dispersed in the lens body to enable selective absorption of the visible light by the particles has been researched, mainly in cases where resin is used as the base material. For example, Japanese Unexamined Patent Publication No. Sho-61-39001 introduces a dispersion of an inorganic pigment, such as titanium oxide (TiO₂), barium sulfate (BaSO₄), red iron oxide (Fe₂O₃), magnesium oxide (MgO), zinc (Zn), etc., in a resin, such as high density polyethylene. However in this case, the shielding of light of a wavelength of 1 to 2 *µ* m, which becomes noise, was inadequate and this means was thus unsuitable for a lens for a sensor that selectively detects infrared light of a wavelength of 3 *µ* m or more. Also, the dispersing of a zirconium (Zr) compound in the same type of resin to enable selective transmission of light of a wavelength of 7 to *µ* m has been proposed in Japanese Unexamined Patent Publication No. Sho-62-284303. However, the lowering of the transmittance of infrared light is considerable in this case since shielding is not accomplished unless 5 to 15 weight % of the pigment is dispersed.

The dispersing of 4 weight % or less of ZnS microparticles in the same type of resin was thus proposed as indicated in Japanese Unexamined Patent Publication No. Hei-9-21701. Also, Japanese patent publication No. Hei-7-86566 discloses the dispersion of fine pigment particles of titanium oxide (TiO₂), zirconium oxide (ZrO₂), etc., which are covered with tri-iron tetroxide (Fe₃O₄), carbon black, and tin oxide (SnO₂), in the same type of resin. Furthermore, Japanese Unexamined Patent Publication No. Hei-8-54478 proposes that the use of zinc selenide (ZnSe) as a pigment for selectively shielding near-infrared light is desirable in a lens made of the same type of resin. However, since the visible light shielding ability and the transmittance of infrared light are in a mutually conflicting relationship, a lens material with which these are well balanced has not been obtained by these methods.

The supporting part that fixes the lens body of a sensor may be made of metal or may be made integral with the lens by the use of the same resin as the lens. An example of the latter is, described for example, in Japanese Unexamined Utility Model publication No. Sho-62-79119. Such integration of the supporting part provides the advantage of eliminating the connection of the lens body and the supporting part, thus allowing the arrangement to be low-cost and have high strength against external forces. The supporting part also acts to shield the extraneous light and electric signals that become noise. Thus in cases where a pigment or filler is added to the resin to shield visible light, the added material must be selected in consideration of their functions.

US-A-4 795 908 discloses an infrared detector, which is arranged so that an infrared sensor is mounted on a circuit board isolated from ambient air in a chamber to detect infrared rays emitted from a human body or the like. A Fresnel lens is covered with a filter member and attached to a cover, wherein the filter member can employ a pigment containing polyethylene to screen visible rays. The light, which has passed through the filter and the lens is filtered by an additional filter member before it is detected by the infrared sensor.

Further, EP-A-0 440 112 discloses an infrared filter disk for radiation detectors, which has an improved opaqueness for unwanted disrupting light, consists of plastics, are translucent for infrared radiation and contains zinc sulphide particles evenly distributed therein, wherein the filter disk may comprise a Fresnel lens.

Still further, US-A-5 783 624 discloses transparent polymer composites having a low thermal expansion coefficient with high transparency and low thermal expansion coefficient, as well as a low refractive index change with temperature. These composites are made of thermoplastic polymers and index-matched glass or ceramic and can be used for optical applications.

Additionally, an infrared sensor is disclosed in JP 08 054478 having granular zinc selenide with such characteristics that the refractive index in the wavelength region of about 10 µm is equivalent to that of a high density polyethylene. Zinc sulphide is mixed and diffused into the polyethylene with high transmittance in the wavelength region of about 10µm.

Further, EP 0 425 229 A1 discloses a high temperature sensor including a black body or grey body detector, which detects radiation characteristics of a temperature and emits characteristic radiation in response thereto. The detector and emission means is situated on the top part of a high temperature hollow wave-guide made from opaque materials to block stray light from the outside of the tubes. Because of the heat of the hot objects measured, the tube comprises ceramic lenses.

### Summary of the invention

An object of this invention is to solve the above-described problems in a non-cooled infrared sensor that uses a ceramic in the lens body to thereby improve in particular the infrared light transmittance of the lens body, which is the light receiving part, improve the property of shielding of the visible light that becomes noise, improve the performance of the sensor as a whole, and reduce the production cost of the sensor.

According to the present invention this object is achieved by a ceramic infrared sensor with the features of claim 1.

Accordingly, this invention concerns a ceramic infrared sensor, with which visible light is shielded, and in the first mode thereof, the sensor has a lens body comprised of a ceramic part, a supporting part which supports the lens body, and a detection part which detects the light that has been transmitted through the lens body. A pigment that shields visible light is contained in the ceramic. The sensor of the second mode of this invention has a lens body, which is comprised of the ceramic part and a resin layer that covers at least the light receiving surface of the ceramic part, a supporting part which supports the lens body, and a detection part which detects the light that has been transmitted through the lens body. A pigment that shields visible light is contained in the ceramic part and resin layer of the lens body. The lens body of this invention includes that with which the wavelength range of a transmittance of 50% or more in practical use is 8 to 12 *µ*m and that with which this wavelength range is 3 to 5 *µ*m. For the former, zinc sulfide (ZnS) is given as a preferable material, and for the latter, spinel (MgAl₂O₄) is given as the preferable material. With regard to the material of the resin layer, it is preferable to have as the main component a resin having polyethylene which is relatively high in transmittance in the infrared range and low in transmittance in the visible range. Of such resins, it is especially preferable to have as the main component a resin having high density polyethylene, with which the influence of pores is small.

The supporting part of the infrared sensor of this invention includes that which is arranged from resin and that which is arranged from metal. The former includes an arrangement where the supporting part and the resin layer of the lens body are made integral by the same resin. Also included is a structure having a cylindrical part between the lens body and the detection part. This part functions to shield the light rays and electromagnetic waves, which become the noise besides the infrared light that is to be detected.

The lens of this invention is comprised of a ceramic lens or a lens with which a resin layer has been formed on the light receiving surface of a ceramic lens, and since a pigment that shields visible light is dispersed uniformly and finely in the ceramics and the resin that is, the raw material of the lens, in a manner unlike in the prior arts, the infrared light transmittance Ti is high and the visible transmittance Tv is low (that is, the visible light shielding performance is high) unlike in the prior arts, especially in the case of a ceramic lens. Thus by using a lens by this invention, an infrared sensor can be provided that exhibits a detection performance of high sensitivity not seen in the prior arts. Also, by appropriately selecting the matrix raw material species of the lens and the pigment species and the amounts, etc. thereof, infrared sensors, with which the infrared light transmittance and the visible light shielding performance are well-balanced in accordance with the required performance levels, can be provided readily. Furthermore, by adopting the structure of connection between the supporting part and lens of this invention, a high-reliable infrared sensor not found in the prior arts can be provided at low cost.

### Brief description of the drawings

Figure. 1 is a schematic drawing of the basic structure of an infrared sensor.
Figure. 2 is a schematic drawing of examples of the formation of the resin layer on the ceramic lens of the sensor by this invention.
Figure. 3 is a schematic drawing of examples in which the lens body of the sensor by this invention is assembled onto the supporting part.
Figure. 4 is a schematic drawing of an example where the lens body of the sensor of this invention is assembled onto the supporting part via the provision of a cylindrical part.
Figure. 5 is a schematic drawing of an example of the manner by which a resin layer is formed on the ceramic lens of the sensor of this invention.
Figure. 6 is a schematic drawing of an example of the manner by which a structure, in which the resin layer and the supporting part of the sensor of this invention are made integral, is formed.
Figure. 7 is a schematic drawing of examples of structures, in which the resin layer and the supporting part of the sensor of this invention are made integral and a cylindrical part is provided as well.
Figure. 8 is a schematic drawing of the method of measuring the degree of sealing of the sensor assembly by this invention.

### Detailed description of the preferred embodiments

The ceramic that comprises the lens body of the sensor of this invention is selected in the following manner in accordance with the wavelength range of the infrared rays to be detected. That is, in the case where light of a wavelength of 3 to 5 µm, which is emitted from an object of high temperature, such as a flame, is to be detected, a ceramic that is high in the linear transmittance in this bandwidth, that is, for example, a ceramic having magnesium fluoride (MgF₂), sapphire (Al₂O₃), spinel (MgAl₂O₄), or yttria (Y₂O₃) as the main component is selected. Among these, ceramics having spinel, which is inexpensive and excellent in heat resistance, as the main component are preferable. Meanwhile, in the case where light of a wavelength of 8 to 12 *µ*m, which is emitted from a low-temperature object, such as a human body, is to be detected, a ceramic that is high in the linear transmittance in such wavelength range, that is, for example a ceramic having zinc selenide (ZnSe), zinc sulfide (ZnS), barium fluoride (BaF₂), or gallium arsenide (GaAs) as the main component or a polycrystalline substance of silicon (Si) or germanium (Ge) is used. Among these, a material having zinc sulfide, which is inexpensive and excellent in the wavelength characteristics of transmittance, is preferable as the main component. Also, it is preferable for the average particle diameter of the crystal particles in the ceramic to be smaller than the wavelength of infrared light in order to raise the level of transmittance of infrared light. For the wavelength ranges of infrared light of this invention, the average particle diameter is preferably 8 *µ*m or less and more preferably 5 *µ*m or less. For the same reason, it is preferable to have a small width of the intergranular phase. The amount of the sintering additive that forms the intergranular phase in the crystal as well as the amounts of pigments and impurities besides the main component are thus preferably made as low as possible.

A resin having polyethylene, polypropylene, polytetraethylene, or polymethacrylic acid as the main component is used for example as the resin that forms the resin layer of the lens body. Among the above, polyethylene resins are especially preferable since they are high in the transmittance of infrared light of the wavelength range of practical use of the sensor of this invention. Among these, resins having high density polyethylene as the main component are the most preferable materials among the abovementioned resins as they are not only high in transmittance among polyethylenes due to the scarcity of pores that scatter infrared light but also because they are excellent in visible light shielding performance as well as in mechanical strength, heat processability, and chemical resistance. The transmittance of light of the lens body will be higher the thinner the resin layer is in the direction in which light is transmitted. On the other hand, if the resin layer is too thin, it becomes difficult to form a uniform resin on the surface of the ceramic part and this is also undesirable from the view point of protecting this part. An optimal thickness is thus selected in accordance with the requirement levels of the sensor that is desired and in comprehensive consideration of these factors. Normally, it is preferable for the thickness to be approximately 30 to 100 *µ*m.

The lens body of this invention includes that which is comprised only of a ceramic part and that with which, in addition to the ceramic part, a resin layer is provided on the light receiving surface and/or the surface on the opposite side of the light receiving surface (the surface on this side shall also hereinafter be referred to as the "transmitting side surface") of the ceramic part. Some examples where a resin layer is provided are shown schematically in Fig. 2. In this Figure, the white portions are the ceramic parts and the black, filled portions are the resin layers. The upper surfaces are the light receiving surfaces. (1) is an example wherein a resin layer is provided only on the light receiving surface, (2) is an example wherein a resin layer is provided only on the transmitting side surface, and (3) is an example wherein resin layers are provided on both the light receiving surface and the transmitting side surface. This resin layer serves mainly to protect the ceramic part and also as a film to prevent the reflection of light. The provision of a resin layer on the transmitting surface also gives the advantage of facilitating the connection with the supporting part. For example, connection using an organic adhesive agent is made possible. Other performances required of the lens body mainly include high transmittance of infrared light and high visible light shielding ability. Thus a desirable form of coating of the lens by resin must be selected in consideration of the various above-described merits for mounting and required performance levels for practical use.

In the case where the lens body is to be comprised only of the ceramic part, the constituting ceramic is made to contain a pigment for shielding visible light. In the case where the light receiving surface is to be coated with a resin layer, the ceramic part and the resin layer is made to contain a pigment. The determination of the combination to be used must be made in consideration of the levels of the desired practical-use characteristics and the wavelength dependence of the transmittance of the ceramic part. Pigments include black pigments and white pigments. The former type shields visible light by direct absorption. The latter type has the function of reflecting and scattering visible light, and with the combined use of a black pigment, the visible light shielding effect can be improved while restraining the decrease of transmittance of infrared light. Combined use also enables the reduction in the total amount of pigment to be used compared with using only a black pigment, and as a result, the transmittance of infrared light can be increased. In the case of combined use, there is an appropriate range of the proportions of addition as shall be described later.

Examples of a black pigment that is used include carbon black, graphite, diamond, titanium black, iron oxide (i.e. a black iron oxide such as FeO or Fe₃O₄), molybdenum (Mo), tungsten (W), iron, nickel, cobalt, copper, and other metals and compounds thereof that are black. Examples of a white pigment that is used include titanium oxide (TiO₂), boron nitride (BN), aluminum nitride (AlN), zinc oxide (ZnO), zinc sulfide, and other metal compounds that are white. With any of these pigments, it is preferable to have high thermal conductivity to the extent possible. In order to maintain the transmittance of the infrared light to be used, the average particle diameter of the pigment that is to be used is preferably less than or equal to the wavelength of the infrared light. For example, if light of a wavelength band of 3 to 5 *µ* m is to be detected, the average particle diameter is preferably 3 *µ* m or less, and if light of a wavelength band of 8 to 12 *µ*m is to be detected, the average particle diameter is preferably 8 *µ*m or less. Also, in order to control both the visible light shielding performance and infrared light transmission performance of the lens body in a well-balanced manner, the pigment particles are preferably dispersed as finely and uniformly as possible in the base material. Thus it is preferable that the average particle diameter of the pigment be as small as possible. However, since the individual particles will tend to aggregate readily if the particle diameter becomes too small, the lower limit of the average particle diameter is preferably set to 0.01 *µ*m (10nm). An even more preferable range is 0.01 to 2 *µ*m.

The amount of pigment dispersed is also an important factor for controlling the visible light shielding performance and the infrared light transmission performance of the lens body in a well-balanced manner. Normally the total amount of the pigment to be added to the ceramic is preferably set in the range of 0.001 to 1 mass %. In this case, a small amount of a pigment species that will shield visible light absolutely even if it lowers the infrared light transmittance is preferably added to increase the sensitivity of the sensor for applications that stress the performance of shielding of the visible light, which becomes noise. In such cases, it is preferable to use a pigment of high blackness, such as carbon black or graphite. The added amount in this case is preferably set in the range of 0.001 to 0.01 mass %. On the other hand, for applications where the infrared light detection level itself is to be improved, it is preferable to add a relatively large amount of a pigment species, which is low in blackness and will not lower the infrared light transmittance significantly despite its low visible light shielding performance. Examples of such a pigment species include tri-iron tetroxide (Fe₃O₄) and tungsten. The amount added in this case is preferably set in the range of 0.01 to 1 mass %. To perform visible light shielding without significantly lowering the infrared light transmittance, it is preferable to select an appropriate amount of pigment in accordance with the blackness of the pigment in the above manner. Normally, the total amount of pigment to be added to the resin is preferably set in the range of 0.05 to 2 mass % and more preferably in the range of 0.1 to 1 mass %. The appropriate amount is preferably adjusted in accordance with the blackness of the pigment species in this case as well. Regardless of whether the base material is a ceramic or a resin, if the total amount of added pigment is less than the lower limit of the range of the appropriate amount, the overall visible light shielding effect of the lens will tend to be low. On the other hand, if it exceeds the upper limit, the linear transmittance of infrared light of the base material may be lowered by the dispersed pigment particles. Though the pigment species may consist only of a black resin regardless of whether the base material is a ceramic or a resin, a white pigment that scatters visible light may be used in combination at an appropriate proportion. The lowering of mainly the transmittance of infrared light can thus be made small, especially in the case where the base material is a resin. In such a case where a black pigment and a white pigment are to be used in combination, the mass ratio of these pigments is preferably controlled to be in the range of 0.1 to 15 as the value of white pigment / black pigment.

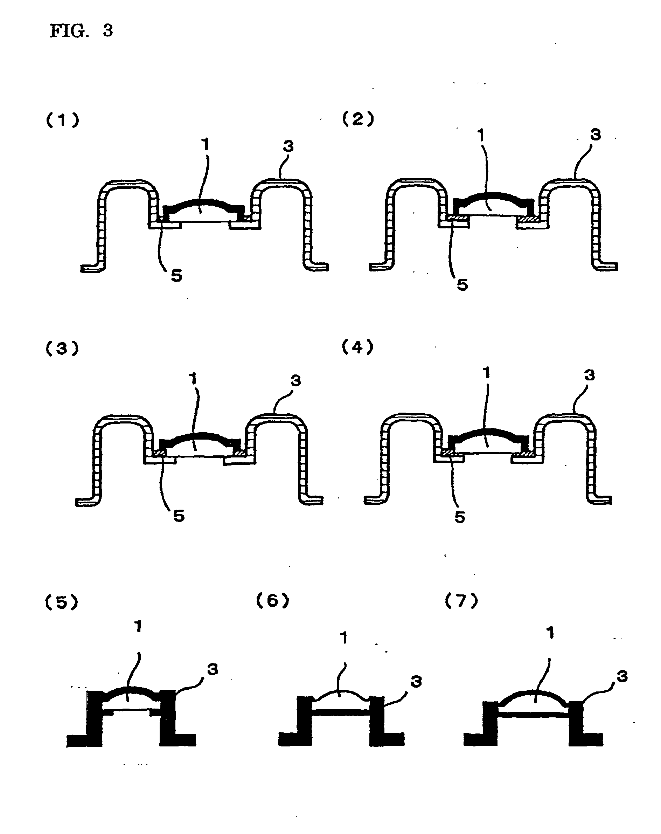

With the sensor of this invention, the lens body is fixed to the supporting part comprised of resin or metal. If a resin is used in a supporting part, the supporting part, which is integral with the resin layer that covers the ceramic of the lens body, can be formed as mentioned above. In this case, the supporting part may be made integral by using the same resin that is used in the resin layer of the lens body. A connected structure can thereby be formed that is not only inexpensive but is also secure in the bonding strength at the connection. Some examples of these are shown schematically in Fig. 3. (1) through (4) of this Figure show cases where a lens body of the form of (1) of Fig. 2 is fixed to a supporting part that is made of metal, with 1 being the lens body, 3 being the metal supporting member, and 5 being the connecting layer that connects these components. Numbers (5) through (7) show cases where the supporting part is made integral by a resin, and (5), (6), and (7) correspond respectively to (1), (2), and (3) in terms of the structure of the lens body. The function of fixing and supporting the lens body (robustness) is required first of all, of the supporting part. Furthermore, since the portion that is surrounded by the supporting part is a part through which the transmitted light passes, the function of shielding the external light and radio waves that are noise (this function shall also hereinafter be referred to as the "noise shielding function") is also required. The use of a metal is thus desirable. In the case where the supporting part is to be formed of resin, it is to important to take into consideration such robustness and noise shielding property. Thus different resins or resins that are of the same base material but differ in the added components (filler, etc.) may be used at the coated part of the lens body and the supporting part or a resin that is reinforced by another material may be used only in the supporting part.

In the case where the supporting part is formed from a different resin, it can be connected directly to the lens body by means of an organic adhesive agent. In the case where the resin layer of the lens body and the supporting part are to be made integral using a resin containing the same added components (pigment, etc.) as mentioned above, it is preferable to balance the visible light shielding performance and the infrared light transmittance in the desired wavelength band by means of the added components and to select components that will also provide robustness and/or a noise shielding property to the supporting part as well. Examples of added components that are suited for this purpose include fine metal powder (for example, of copper, silver, or other precious metal or ferrous metal), carbon powder, and powders of ferrites, such as tri-iron tetroxide, etc. Also in order to add robustness and adequate noise shielding property to only the supporting part, this part may be made to contain a reinforcing material. Examples of materials for this purpose include fibers of metal, carbon, ceramic, etc. and woven forms of such fibers.

As the metal to be used in the supporting part, it is preferable to have a material having as the main components Fe, Ni, and Co, which are close in thermal expansion coefficient to the ceramic of the lens body, are relatively inexpensive, and are also excellent in environmental resistance. Examples include iron (Fe), 54% Fe - 29% Ni- 17% Co alloy (trade name:kovar), 42 alloy, 46 alloy, and 426 alloy.

In the case where a lens that is comprised of ceramic is to be connected to a metal supporting part, materials such as the solder, low-melting-point glass, etc. described below are used in the layer for connecting the supporting part and the lens. Examples of favorable solders include Sn-Cu, Sn-Zn, and Sn-Cu-Ag solders. If a solder is to be used, interposed layers are preferably provided between the ceramic and the solder layer and between the metal and the solder layer. A metal material, having for example nickel (Ni), gold (Au), silver (Ag), tin (Sn), copper (Cu), and zinc (Zn) as the main components, is used in the interposed layers. Such metals are used singularly or are combined suitably in accordance with the combination of the materials of the lens body and the supporting part. For this purpose, the thermal expansion coefficients and other physical characteristics of the two parts, the physical and chemical affinity for connection of the two parts, and efficiency of the connection work should be taken into consideration. In forming an interposed layer comprising an abovementioned metal, a known means, such as plating, vapor deposition, printing, or flame coating, may be used. Among these, plating is preferable in terms of it being low cost and being low in the scattering of quality. Nickel plating is especially preferable from the view point of corrosion resistance.

In forming such an interposed layer, comprised of metal, directly on the ceramic, a small amount of an active metal or a below-mentioned low-melting-point glass may be added to increase the strength of bonding with the ceramic, or the surface roughness of the connected surface of the ceramic may be controlled to heighten the anchor effect on the connected surface. Examples of an active metal that is added in this case include group IVa metals (Ti, Zr, and Hf) and group Va metals (V, Nb, and Ta). The surface roughness of the ceramic is preferably controlled to be in the range of approximately 0.1 to 1 *µ*m as Ra as defined in JIS B 0601. This is because below the lower limit, the level of bonding strength tends to be scattered while when the upper limit is exceeded, the thickness of the metal layer tends to be non-uniform. In place of a layer comprised of an abovementioned metal, a layer of a glass (the abovementioned low-melting-point glass), which is lower in melting point than the ceramic of the lens body and the metal material that comprises the supporting part, may be formed as the interposed layer. As the low-melting-point glass to be used, an appropriate glass is selected in accordance with the combination of the materials of the lens and the supporting part. That is, it is preferable to select a glass material with a melting temperature at which these parts will not be degraded and with a thermal expansion coefficient that is close to that of the ceramic used. For example, if ZnS or spinel (MgAl₂O₄) is used in the ceramic and kovar (trade name) is used in the supporting part, a glass is selected with which the working temperature is approximately 300 to 500 ° C and the thermal expansion coefficient is approximately 4 to 10 × 10⁻⁶/° C and thus is close to that of the ceramic. Borate glass can be given as an example of a preferable glass. This layer of low-melting-point glass is normally disposed between the interposed layer on the supporting part and the ceramic.

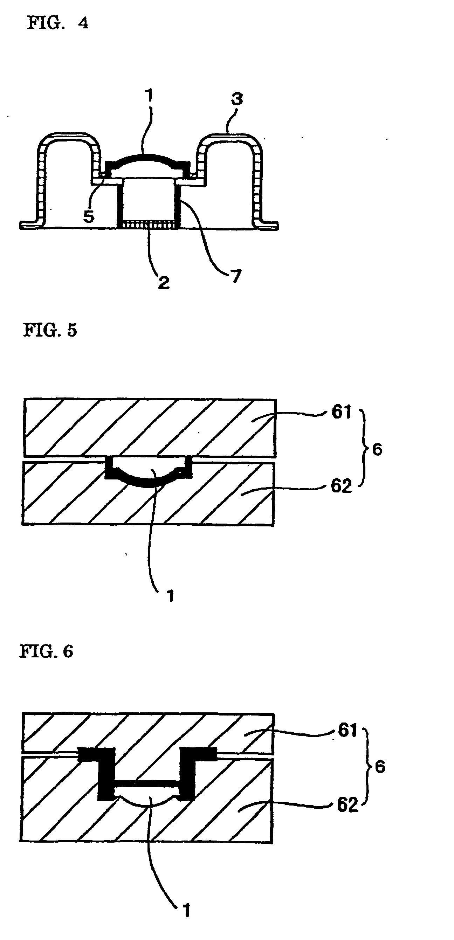

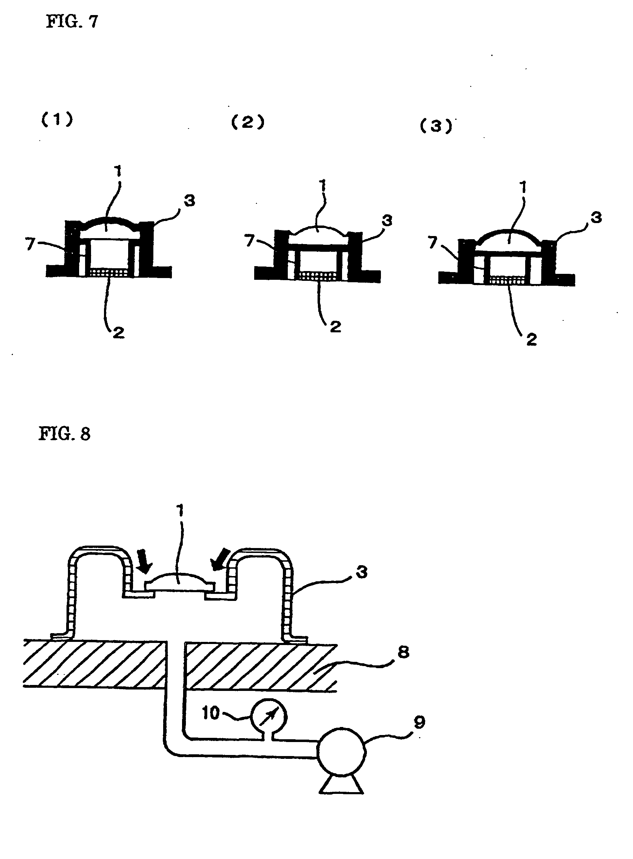

Also as shown schematically in Fig. 4, a hollow cylindrical part 7 (shall also be referred to as "cylindrical part") made of metal and/or resin is preferably provided at the part, between the transmitting side of lens body 1 and detection part 2, through which the transmitted light passes. This cylindrical part is provided with the function of shielding the noise besides the infrared light that is to be detected. Especially required is the function of reflecting or absorbing the infrared rays that are generated by the radiant heat from the supporting part and become noise. Though this part is therefore preferably made from metal, if this part is to be arranged with resin as the base material, it is preferable to take into consideration the types of pigment and filler, etc. that are to be contained in the resin to heighten the function of the resin as mentioned above in the description of a supporting part made of resin. This cylindrical part may be formed at the same time as the supporting part if the lens body is to be fixed to the supporting part. If in this case, the resin layer of the lens body is of the same resin as the supporting part, the resin layer may be formed at the same time as well. Some structural examples of assemblies arranged in this manner are shown schematically in Fig. 7. The symbols in this Figure correspond to those in Fig. 4. Also, (1) to (3) correspond to (5) to (7) of Fig. 3 in terms of the form of attachment of the resin layer onto the lens body.

The method of manufacturing a sensor by this invention shall now be described. As the ceramic of the lens body, a ceramic comprising of the various abovementioned main components is used. This ceramic is obtained by first mixing a pigment powder, such as that mentioned above, with the main component raw material, forming the powder to a prescribed shape, then sintering to form a sintered body, and finishing to the prescribed lens shape. The type, average particle diameter, and added amount of the pigment should be as mentioned above.

The purity of the ceramic raw material powder, which is the main raw material of the ceramic part of the lens body of this invention, is preferably 99.9% or more. Also, if a pigment is to be dispersed, the added pigment powder preferably has a purity of the same level to the extent possible. Though the ceramics may contain a small amount of a sintering additive for improving the denseness of the material, a large added amount is not preferable since the width of the intergranular phase will become large and cause the lowering of transmittance. Thus the less the amount added, the better. Although not adding any additive is desirable, if an additive is necessary, the amount added is preferably set to 1 mass % of the entirety at the most. With the ceramic part of the lens body of this invention, when pigment particles are dispersed therein, the pigment particles will be dispersed extremely finely and uniformly in comparison to the prior arts. In order to obtain such a dispersion condition, the fine pigment powder particles are made to become dispersed uniformly in the ceramic powder, which is the main component, without letting the particles flocculate to the extent possible in the process of preparing the mixture of the main component powder and the pigment powder. Various methods, such as (1) coprecipitating the precursors, such as the organometallic compounds, etc., of the main component and the pigment component in advance and then sintering to prepare the mixture of the desired composition, (2) priorly preparing a powder in which the main component particles are complexed with the pigment particles or a precursor thereof, (3) adding a small amount of a deflocculating agent prior to mixing in order to prevent the flocculation of particles, (4) applying ultrasonic vibration of a wavelength matched to the average particle diameter of the pigment in the process of mixing, (5) performing dry ball mill mixing, which is large in crushing and mixing effect, to prevent flocculation upon drying of a mixed system that was prepared using a solvent, etc., and methods that combine the above methods may be considered.

The scattering width of the dispersed amount of pigment particles in the ceramic powder mixed in the above manner should be 10% or less and preferably 5% or less of the amount of pigment particles added. With this invention, this scattering width shall be referred to as the degree of dispersion and shall be indicated as R(%). The closer this value is to 0%, the more uniform the dispersion of the pigment particles is in the powder. This value is checked as follows. Sampling is performed from at least 10 locations of the mixed powder and the pigment component elements that are contained in these samples are quantified by chemical analysis or physical analysis means, etc. The element that is the object of analysis is, for example, carbon in the case of carbon black or graphite, iron in the case of tri-iron tetroxide, and zinc in the case of zinc oxide. The arithmetic mean value Wₒ (mass %; normally this value is nearly equal to the added mass % of the pigment) and the scattering width (that is, the difference between the maximum value and the minimum value) A w (mass %) are determined by the quantity values obtained for all samples. Using these data, the value of R is calculated as R = (Δw/W₀) × 100 (%). The smaller the value of this R, the higher the uniformity of dispersion of the pigment particles in the ceramic lens. With the ceramic lens of this invention, though the wavelength dependence of transmittance will differ and the levels of transmittance in the targeted infrared range and the visible range as well as the degree of balance of these levels will differ according to the combination of the matrix species and the pigment species, for a given combination of these species, it is preferable to have a high uniformity of dispersion of the pigment, and thus with the ceramic lens of this invention, the value of R is preferably controlled to be 10 or less. By thus controlling the value of R, the value of the ratio Ti/Tv of the infrared light transmittance Ti and the visible light transmittance Tv of the lens (that is, the evaluation index that indicates the heightening of the infrared light transmittance and visible light shielding ability of the ceramic lens of the sensor of this invention) can be controlled in a well-balanced manner.

If with the ceramic lens of this invention and a high sensor sensitivity and definite visible light noise shielding ability are required, the lens performance with which the transmittance Ti of the targeted infrared light is 50% or more and the value of the ratio Ti/Tv with respect to the visible light transmittance Tv is 200 or more can be obtained by making the value of R be 10% or less. Furthermore, by selecting the optimal combination of matrix and pigment, lens performance with which the Ti is 60% or more and the Ti/Tv is 100 or more can be obtained. On the other hand, if a high infrared light transmittance is required, lens performance with which the Ti is 55% or more and the Ti/Tv is 5 or more can be obtained by making the value of R be 10% or less. Furthermore, by selecting the optimal combination of matrix and pigment, lens performance with which the Ti is 65% or more and the Ti/Tv is 10 or more can be obtained. Thus regardless of the mixing method employed (that is, regardless of which of the abovementioned means is employed) in preparing the ceramic lens, it is preferable to mix the raw material powders upon selecting an appropriate combination of mixing conditions such that the R value of the mixed powder will be 10% or less.

After forming the mixed ceramic powder prepared in the above manner, the formed object is sintered under appropriate conditions that are suited for the respective main components of the ceramics. In this process, it is preferable to avoid as much as possible the mixing of impurities besides the pigment component that lower the transmittance of the ceramic base material. For example, a dry method that does not require an organic binder is preferable for performing the granulation for increasing the filling property of the mixed powder and for preparing the formed object. Thus for example, forming is preferably performed by isostatic pressing. It is also preferable to take considerations regarding the container for sintering and the heating atmosphere so as not to modify the ceramics. The amount of sintering additive should also be made low so as not to lower the transmittance. If it is difficult to achieve denseness by sintering under atmospheric pressure, a pressurized sintering method, such as hot pressing inside a mold or hot isostatic pressing (HIP), is also an effective means. By restricting the mixing in of impurities in the above manner, the R value of the sintered ceramic will be maintained substantially at the level of the mixed powder.

An infrared light transmitting resin layer is formed as necessary on the light receiving lens surface and/or transmitting surface of the ceramic part that has been prepared in the manner described above. Various known methods such as extrusion molding and injection molding can be applied as the method for forming the resin. For example, in the case where a resin layer is to be added by injection molding as shown schematically in Fig. 5, the ceramic part (the white, semi-cylindrical part) is set along with the resin (the black, filled part) in mold 6, comprising a metal upper punch 61 and lower punch 62, and the mold is heated to form a resin layer of predetermined thickness and thereby make the lens body. An example of forming the supporting part integrally using the same resin is shown schematically in Fig. 6. The meanings of the symbols are the same as those of Fig. 5. Some examples of the modes of formation of the resin layer onto the ceramic part formed in the above-described manner are shown in the abovementioned Figs. 2 to 4. If the resin layer is to be formed over the entire surface, the total thickness of the upper and lower resin layers is preferably controlled to be within the range of 0.03 to 0.1 times the thickness of the entire lens body, including the ceramic part. The linear transmittance of the lens will be maximized in this case.

In the case where the lens body is to be connected to a metal supporting member as shown in Fig. 3, the connection is made for example via a connecting layer 5 of the following arrangement. Normally in the case where solder or low-melting-point glass is to be used in the connecting layer, a nickel plating layer for example is formed, as an interposed layer comprised of metal, around the entire perimeter of the supporting part. (1) and (2) of the same Figure show cases where after forming a nickel plating layer on the connection interfaces of both the lens body 1, with which a ceramic is coated with a resin layer, and the supporting part 3 in advance, the two parts are joined using an abovementioned solder or low-melting-point glass. In (2), the bottom surface of the lens body is the connection interface. In (3), connection is made using a low-melting-glass with a shape matching the connection interfaces shown in the Figure. The use of a low-melting-point glass eliminates the need to plate the surface of the lens body. Normally in the case where a solder layer is to be used as the interposed layer, a nickel plating layer may first be formed as a metal layer around the entire perimeter of the supporting part.

If a pigment for visible light shielding is to be added to the resin layer, only a black pigment is used or a combination of a black pigment and a white pigment is used. The preferable average particle diameters and added dispersion amounts of the pigments are as mentioned above. So as not to lower the transmittance, the lower the total added amount of pigment the more preferable. However, this will differ according to the pigment species. An advantage that is provided in the case of combined use of a black pigment and a white pigment is that the visible light can be scattered by the white pigment and then absorbed by the black pigment instantaneously. In this case, by making the average particle diameter of the white pigment be within a range that is suited for the scattering of visible light, the added amount of the black pigment, which is a transmittance lowering factor, can be decreased. For example, in the case where a high density polyethylene resin is coated on a ZnS ceramic lens, by adding 0.5 to 1.5 weight % of a white pigment with an average particle diameter of 0.01 to 0.5 *µ*m in the resin, the total amount of pigment can be made approximately 80% less than in the case where only a black pigment is added. As a result, the transmittance of the lens body can be improved by approximately 70% in comparison to the case where only a black pigment is added. In this case, the proportion of the white pigment with respect to the total amount of pigment should be within the range of 20 to 97 weight % and preferably in the range of 60 to 97 weight %.

In preparing a mixture of pigment and resin, it is important, as in the above-described case of the ceramic lens, to disperse the pigment particles in the resin matrix uniformly without letting the particles flocculate to the extent possible. A granular raw material is normally used as the resin material for forming the resin layer. It is therefore preferable to disperse the pigment particles in the individual grains of this main component in advance. Various means may be considered for this purpose, such as (1) performing dispersion and mixing in a tumbler type mixer in advance, (2) adding a dispersant in this process, (3) preparing a master batch of grains that contain the pigment in advance and lowering the heating temperature in the process of kneading to heighten the dispersion effect by shear force, (4) performing pretreatment by a mechanical means to restrain flocculation of the pigment, etc. and combinations of such means.

The lens body and the supporting part are then connected. If the resin layer of the lens body and the supporting part are of the same material, the supporting part may be formed at the same time the resin layer is formed on the ceramic part of the lens as mentioned above. In this case, the detection part may be made integral by simultaneous forming as well. If the lens is to be fixed to a metal supporting part, soldering is performed in combination with the use of an interposed layer such as described above. In order to heighten the reliability of the joining strength of the connection in this case, it is preferable for the thermal expansion coefficient of the component metal of the supporting part to be as close to that of the ceramic as possible. Also, a low-melting-point glass may be used in place of solder as mentioned above. In this case, the low-melting-point glass layer and plating layer are for example layered in that order from the ceramic side. The connection can be made by means of a layer of adhesive agent, such as epoxy resin, instead of solder. In this case, the adhesive agent layer and plating layer are for example layered in that order from the ceramic side.

To check the reliability (degree of sealing) of the connection of the lens and the supporting part, the leak velocity is measured using a helium leak detector as shown schematically in Fig. 8. As shown in Fig. 8, first the assembly, with which lens body 1 is connected to a metal supporting part 3, is sealingly adhered onto a base 8, provided with a vacuum drawing hole (here, the passage of air through the interface between the supporting part and the base is blocked) and then vacuum is drawn by means of vacuum pump 9. Vacuum drawing is then stopped, helium gas is blown from the direction of the white arrow onto the connection part of lens body 1, and the pressure rise in the assembly in this process is checked by means of leak detector 10 until a fixed value is reached. The leak velocity is calculated by dividing the rise in pressure by the waiting time. A leak velocity that is allowable for practical use is 1 × 10 ⁴Pa·cm³/sec (approximately 1 × 10⁻⁹atm·cc/sec) or less.

### Examples

### Example 1

As the raw material of the lens body, a raw material comprised of a ceramic, having zinc sulfide (ZnS), zinc selenide (ZnSe), and spinel (MgAl₂O₄) as the main components, was prepared. A powder, comprised of zinc sulfide, zinc selenide, and spinel and with which the average particle diameter and the purity of each of these species are 1 *µ*m and 99.99% or more, respectively, was prepared as the powder that is to be the raw material of the main components. Powders of the various pigments indicated in Table 1 were added to these main component powders and the pigments and main components were mixed by the following mixing methods. The method indicated as A in Table 1 is the dry method of ball mill mixing the raw material components indicated in Table 1, the method indicated as B is the method of mixing powders, which had been pre-crushed and mixed in advance by a ball mill, by the method of A, and the method indicated as C is the method of ball mill mixing the raw material components in alcohol.

Of the above, with the mixture prepared by wet mixing, the slurry that was obtained upon mixing was dried under reduced pressure. 200g of powder were sampled from each of these mixed powders and from each of these samples, 5g of powder were extracted from each of 10 points (n = 10), and the contents of carbon (C; in the case of carbon black, graphite, or diamond), iron (Fe; in the case of tri-iron tetroxide), and zinc (Zn; in the case of zinc oxide), which are the pigment component elements in the powders, were determined by chemical analysis. The arithmetic mean value W₀ of the 10 analysis values that were obtained and the difference Δ w of the maximum and minimum values (the unit is mass % in both cases) were determined and the degree of dispersion R (%) was determined by dividing Δ w by W₀. The smaller the value of R in Table 1, the more uniform the dispersion of the pigment particles in the mixture.

All powders were then filled into rubber molds while applying vibration. A rubber lid was then placed and sealed on each mold while drawing vacuum. The molds were then placed in an isostatic pressing device and 50 sample pieces were isostatically pressed into a disk-like shape at a pressure of 98Mpa for each sample. With samples 18 and 32, powders without pigment added were isostatically pressed. With sample 13, carbon black powder, which is a black pigment, and zinc oxide powder, which is a white pigment, were combined and added at the amounts shown in the Table.

The formed objects were then placed inside a uniaxial press mold, which is made of graphite and provided with upper and lower punches, and the temperature was raised under a vacuum atmosphere of 0.15Pa. Thereafter, the formed object was maintained under the same atmosphere at 1000° C in the case of zinc sulfide (ZnS) samples, 950° C in the case of zinc selenide (ZnSe) samples, and 1600° C in the case of spinel (MgAl₂O₄) samples and thereafter hot press sintered while applying a pressure of 40MPa by means of the upper punch. All sintered objects were made dense to a relative density of 100% (proportion of the density of the sintered object as measured by the submersion method with respect to the theoretical density as calculated from the mixture composition).

The respective sintered samples that were obtained were then mirror finished on all surfaces and made into a disk-like shape of 12mm diameter and 3mm thickness in the final stage. The samples were then subject to 100% checks of the infrared linear transmittance in the thickness direction using a double-beam spectrometer. The measurement wavelength range was set to 8 to 12 µm in the case of zinc sulfide and zinc selenide samples and to 3 to 5 *µ*m in the case of spinel samples. The value (%) determined by dividing the sum of the average transmittance values in the abovementioned wavelength range by the number of samples, 50, is shown for each sample in the infrared range column of "Average transmittance" in Table 2 (the values of Ti). Also, in order to check the visible light shielding performance of each sample, the transmittance of laser light (visible light) of a wavelength of 830nm was checked. The results are shown in the visible light range column of "Average transmittance" in Table 2 (the values of Tv).

One sample was then extracted for each type of finished sample, the breakage plane was observed at a magnification of 1000 times by a scanning electron microscope, the number N and particle size D of crystal particles that are partitioned by the diagonal lines of the rectangular field image were checked, and the average particle diameter of the crystals of each sample was calculated by dividing the total of D by N. These results are also shown in Table 2.

The following can be understood from the above results. (1) With ceramics in which pigment particles were dispersed, though the results are influenced by the pigment species and the average particle diameter and added amount thereof, generally the smaller the degree of dispersion R of the pigment particles (that is, the more uniformly the pigment particles are dispersed in the main component matrix comprised of ceramics), the greater the transmittance Ti value in the infrared range and the smaller the visible light transmittance Tv value. As a result, a comparison of ceramics prepared from powders of the same mixture composition shows that the Ti/Tv value (the ratio of the transmittance of light of infrared range wavelengths to the transmittance of visible light of 830nm wavelength), which is an index of the level of performance of selective transmission of infrared rays, increase significantly and the material thus becomes more preferable as the raw material of the lens of the ceramic infrared sensor as the R decreases (samples 1 to 3). (2) In order to secure high uniform dispersion of the pigment particles in the ceramic matrix and to make a small value of R, the average particle diameter of the pigment particles is preferably controlled to be in the range of 0.01 *µ*m to less than or equal to the lower limit of the wavelength range of practical use (sample 2, samples 4 to 10, and samples 20 to 25). (3) For the same reasons, the total amount of pigment added, though depending on the pigment species, is preferably controlled for example to be within the range of 0.001 to 0.1 mass % in the case of carbon black and graphite, which are high in blackness, and to be within 0.01 to 1 mass % in the case of tri-iron tetroxide, which is comparatively low in blackness (sample 2, samples 11 and 12, samples 14 to 16, and samples 26 to 30). (4) If the total added amount is the same, the lowering of the transmittance Ti can be restricted to a smaller level with a combination of black and white pigments than in the case of adding only a black pigment (samples 13 and 14).

**Table 1**

| Preparation of the ceramic raw materials | | | | | | |
|---|---|---|---|---|---|---|
| Raw material sample No. | Material composition | | | | Mixing method | Degree of dispersion R of the pigment in the powder (%) |
| | Main component | Pigment | | | | |
| | Material | Material | Average particle diameter ( *µ* m) | Added amount (mass %) | | |
| * 1 | ZnS | CB | 0.1 | 0.001 | C | 30 |
| 2 | ZnS | CB | 0.1 | 0.001 | B | 2 |
| * 3 | ZnS | CB | 0.1 | 0.001 | A | 20 |
| 4 | ZnS | CB | 0.008 | 0.001 | B | 34 |
| 5 | ZnS | CB | 0.01 | 0.001 | B | 5 |
| 6 | ZnS | CB | 1 | 0.001 | B | 3 |
| 7 | ZnS | CB | 2 | 0.001 | B | 5 |
| 8 | ZnS | CB | 3 | 0.001 | B | 7 |
| 9 | ZnS | CB | 8 | 0.001 | B | 10 |
| 10 | ZnS | CB | 9 | 0.001 | B | 34 |
| 11 | ZnS | CB | 0.1 | 0.0008 | B | 3 |
| 12 | ZnS | CB | 0.1 | 0.01 | B | 3 |
| 13 | ZnS | FO | 0.1 | 0.001 | B | 3 |
| | | ZO | 0.1 | 0.009 | | |
| 14 | ZnS | FO | 0.1 | 0.01 | B | 3 |
| 15 | ZnS | FO | 0.1 | 1 | B | 3 |
| 16 | ZnS | FO | 0.1 | 1.2 | B | 3 |
| 17 | ZnS | DM | 0.1 | 0.3 | B | 3 |
| 18 | ZnS | No addition of Pigment | | --- | --- | --- |
| 19 | ZnSe | CB | 0.1 | 0.001 | B | 2 |
| 20 | Spinel | GR | 0.008 | 0.001 | B | 27 |
| 21 | Spinel | GR | 0.01 | 0.001 | B | 4 |
| 22 | Spinel | GR | 1 | 0.001 | B | 3 |
| 23 | Spinel | GR | 2 | 0.001 | B | 4 |
| 24 | Spinel | GR | 3 | 0.001 | B | 8 |
| 25 | Spinel | GR | 4 | 0.001 | B | 33 |
| 26 | Spinel | GR | 0.1 | 0.0008 | B | 3 |
| 27 | Spinel | GR | 0.1 | 0.001 | B | 1 |
| 28 | Spinel | FO | 0.1 | 0.01 | B | 2 |
| 29 | Spinel | FO | 0.1 | 1 | B | 3 |
| 30 | Spinel | FO | 0.1 | 1.2 | B | 3 |
| 32 | Spinel | No addition of Pigment | | --- | --- | --- |
| Note) In the Table, CB, GR, FO, ZO, and DM indicate carbon black, graphite, tri-iron tetroxide, zinc oxide, and diamond, respectively. * indicates a comparative example. | | | | | | |

**Table 2**

| Characteristics of the ceramic raw materials | | | | |
|---|---|---|---|---|
| | Ceramics | | | |
| Raw Raw material sample No. | Average particle diameter (*µ* m) | Average transmittance (%) | | Ti /Tv |
| | | Infrared range Ti | Visible range Tv | |
| * 1 | 4.0 | 45.8 | 0.287 | 114 |
| 2 | 4.0 | 52.1 | 0.016 | 3170 |
| *3 | 4.0 | 51.6 | 0.187 | 275 |
| 4 | 4.0 | 49.8 | 0.164 | 303 |
| 5 | 4.0 | 52.8 | 0.023 | 2294 |
| 6 | 3.9 | 52.9 | 0.016 | 3220 |
| 7 | 3.9 | 52.7 | 0.025 | 2140 |
| 8 | 3.9 | 52.6 | 0.033 | 1594 |
| 9 | 3.8 | 52.3 | 0.046 | 1137 |
| 10 | 3.8 | 49.8 | 0.164 | 303 |
| 11 | 4.0 | 63.2 | 0.986 | 64 |
| 12 | 4.0 | 26.1 | 1.15×10⁻⁵ | 2.27×10⁵ |
| 13 | 4.0 | 69.4 | 11.3 | 6.1 |
| 14 | 4.0 | 60.8 | 11.5 | 5.3 |
| 15 | 4.0 | 56.8 | 4.80 | 12 |
| 16 | 4.0 | 46.3 | 0.70 | 67 |
| 17 | 4.0 | 62.6 | 0.271 | 231 |
| 18 | 4.0 | 70.8 | 12.1 | 5.9 |
| 19 | 4.0 | 53.0 | 0.095 | 556 |
| 20 | 7.5 | 58.4 | 1.09 | 54 |
| 21 | 7.5 | 61.9 | 0.15 | 406 |
| 22 | 7.4 | 62.1 | 0.11 | 570 |
| 23 | 7.4 | 61.9 | 0.16 | 378 |
| 24 | 7.4 | 61.3 | 0.31 | 201 |
| 25 | 7.4 | 61.3 | 1.09 | 56 |
| 26 | 7.5 | 74.1 | 6.54 | 11 |
| 27 | 7.5 | 61.1 | 0.109 | 561 |
| 28 | 7.5 | 71.3 | 3.5 | 5.3 |
| 29 | 7.5 | 66.0 | 5.6 | 12 |
| 30 | 7.5 | 54.3 | 0.80 | 67.9 |
| 31 | 7.5 | 83.0 | 80 | 1.04 |

| | | | | |
|---|---|---|---|---|
| * indicates a comparative example. | | | | |

### Example 2

The various resins indicated in Table 3 were prepared. Also, though not indicated in the Table, a hindered amine light stabilizer was added to all samples as an ultraviolet degradation prevention agent at an amount of 0.03 weight % with respect to the total amount of resin and pigment. With each resin, the resin alone or a mixture with which the pigment was added to the resin was first kneaded uniformly and then molded into a tape of 15mm width and 0.1mm thickness by the injection molding method. In the case of a resin to which pigment was added, the powders of the resin and the pigment were mixed in advance using a tumbler type mixer, then kneaded for 1 hour using a kneader with a shearing blade, and then loaded into the injection molder. Thereafter, the tape was cut out into disk-like shapes with a 12mm diameter and 50 sample pieces with mirror finished surfaces were prepared for each sample. No pigment is added to sample 1 and only a black pigment is added to sample 2. The samples were subject to 100% checks of the linear transmittance in the thickness direction in the respective infrared wavelength ranges of 3 to 5 *µ*m and 8 to 12 *µ*m using a double-beam type spectrometer. Using these measurement data, the arithmetic mean values were calculated in the same manner as in Example 1. The results are shown as the Ti values according to the wavelength band in the infrared range column of "Average transmittance" of Table 4. Likewise, in order to see the visible light shielding performance, the transmittance in the thickness direction of a laser light of 830nm wavelength was checked using the same procedure as Example 1, average values were calculated in the same manner as the abovementioned Ti values, and the results are shown as the Tv values in the visible range column of "Average transmittance" of Table 4. The Ti/Tv ratio values were calculated for the respective wavelength bands for Ti and these are shown at the right end of Table 4. For all cases, these are average values for 50 samples. Though not shown in the Table, when the samples to which pigment was added were checked for the degree of dispersion R in the base material in the same manner as the ceramics of Example 1, the values of R were within the range of 3 to 4 % for all samples. For comparison, a sample of the prior-art mixing method was prepared by kneading the resin of the same composition as sample 4 using an ordinary kneader without a shearing blade and performing molding using an injection molder. A check of the degrees of dispersion of carbon black and titanium dioxide in the formed objects of sample 4 of this invention and the comparative sample in the same manner as in the case of ceramics showed the degree of dispersion of sample 4 of this invention to be 3% and that of the comparative sample to be 34%. The infrared transmittance Ti value of the molded object of this comparative sample was 64%, the transmittance Tv value for visible light of 830nm was 66%, and as a result, the Ti/Tv value was 0.97.

**Table 3**

| Preparation of the resin raw materials | | | | | | | | | |
|---|---|---|---|---|---|---|---|---|---|
| No. | Main Component | Black pigment | | | White pigment | | | Total added amount of pigments A + B | Ratio of added amounts of pigments B/A |
| | resin | Material | Average particle diameter(*µ* m) | Added amount A (mass %) | | Average particle diameter (*µ* m) | Added amount A (mass %) | (mass %) | |
| 1 | HPE | Not | --- | --- | Not | --- | --- | 0 | --- |
| | | added | | | added | | | | |
| 2 | HPE | CB | 0.1 | 0.7 | Not | --- | --- | 0.7 | 0 |
| | | | | | added | | | | |
| 3 | HPE | CB | 0.1 | 0.002 | TO | 0.1 | 0.008 | 0.01 | 4 |
| 4 | HPE | CB | 0.1 | 0.01 | TO | 0.1 | 0.04 | 0.05 | 4 |
| 5 | HPE | CB | 0.1 | 0.02 | TO | 0.1 | 0.08 | 0.10 | 4 |
| 6 | HPE | CB | 0.1 | 0.2 | TO | 0.1 | 0.8 | 1.0 | 4 |
| 7 | HPE | CB | 0.1 | 0.4 | TO | 0.1 | 1.6 | 2.0 | 4 |
| 8 | HPE | CB | 0.1 | 0.44 | TO | 0.1 | 1.76 | 2.2 | 4 |
| 9 | HPE | CB | 0.1 | 0.37 | TO | 0.1 | 0.33 | 0.7 | 0.8 |
| 10 | HPE | CB | 0,1 | 0.35 | TO | 0.1 | 0.35 | 0.7 | 1.09 |
| 11 | HPE | CB | 0.1 | 0.14 | TO | 0.1 | 0.56 | 0.7 | 4.0 |
| 12 | HPE | CB | 0.1 | 0.09 | TO | 0.1 | 0.61 | 0.7 | 6.8 |
| 13 | HPE | CB | 0.1 | 0.06 | TO | 0.1 | 0.64 | 0.7 | 10.7 |
| 14 | HPE | CB | 0.1 | 0.04 | TO | 0.1 | 0.66 | 0.7 | 16.5 |
| 15 | HPE | CB | 0.008 | 0.1 | TO | 0.008 | 0.7 | 0.8 | 7 |
| 16 | HPE | CB | 0.01 | 0.1 | TO | 0.01 | 0.7 | 0.8 | 7 |
| 17 | HPE | CB | 0.2 | 0.1 | TO | 0.2 | 0.7 | 0.8 | 7 |
| 18 | HPE | CB | 1 | 0.1 | TO | 1 | 0.7 | 0.8 | 7 |
| 19 | HPE | CB | 2 | 0.1 | TO | 2 | 0.7 | 0.8 | 7 |
| 20 | HPE | CB | 3 | 0.1 | TO | 3 | 0.7 | 0.8 | 7 |
| 21 | HPE | CB | 8 | 0.1 | TO | 8 | 0.7 | 0.8 | 7 |
| 22 | HPE | CB | 9 | 0.1 | TO | 9 | 0.7 | 0.8 | 7 |
| 23 | HPE | TB | 9 | 0.1 | ZO | 9 | 0.7 | 0.8 | 7 |
| 24 | HPE | FO | 9 | 0.1 | ZS | 9 | 0.7 | 0.8 | 7 |
| 25 | HPE | Mo | 9 | 0.1 | ZSe | 9 | 0.7 | 0.8 | 7 |
| 26 | PE | CB | 0.1 | 0.1 | TO | 0.1 | 0.7 | 0.8 | 7 |
| 27 | PE | FO | 0.1 | 0.1 | TO | 0.1 | 0.7 | 0.8 | 7 |
| 28 | PPY | CB | 0.1 | 0.1 | TO | 0.1 | 0.7 | 0.8 | 7 |
| 29 | PTE | CB | 0.1 | 0.1 | TO | 0.1 | 0.7 | 0.8 | 7 |
| Note) In the Table, HPE, PE, PPY, and PTE in the "Main component resin" column are, respectively, high density polyethylene, polyethylene, polypropylene, and polytetraethylene. The CB, TB, Mo, FO, TO, ZS, and ZSe in the "Black pigment" and "White pigment" columns are, respectively, carbon black, titanium black, molybdenum, tri-iron tetroxide, titanium dioxide (titanium white), zinc sulfide, and zinc selenide. | | | | | | | | | |

**Table 4**

| Characteristics of the resin raw materials | | | | | |
|---|---|---|---|---|---|
| No. | Average transmittance(%) | | | Ti/Tv | |
| | Infrared range Ti 8-12 *µ* m | 3-5 *µ* m | Visible range Tv | For Ti for 8 to 12 *µ* m | For Ti for 3 to 5 *µ* m |
| 1 | 81 | 68 | 74 | 1.1 | 0.9 |
| 2 | 40 | 33 | 11 | 3.7 | 3.1 |
| 3 | 78 | 65 | 40 | 1.9 | 1.6 |
| 4 | 76 | 64 | 26 | 3.0 | 2.5 |
| 5 | 74 | 63 | 18 | 4.1 | 3.5 |
| 6 | 49 | 41 | 7.7 | 6.4 | 5.4 |
| 7 | 31 | 26 | 2.2 | 14 | 12 |
| 8 | 14 | 12 | 0.84 | 17 | 14 |
| 9 | 50 | 42 | 7.9 | 6.4 | 5.4 |
| 10 | 51 | 43 | 5.6 | 9.1 | 7.6 |
| 11 | 56 | 47 | 11 | 5.0 | 4.2 |
| 12 | 57 | 48 | 13 | 4.4 | 3.7 |
| 13 | 58 | 49 | 15 | 4.0 | 3.4 |
| 14 | 49 | 42 | 13 | 3.8 | 3.2 |
| 15 | 54 | 45 | 11 | 4.7 | 4.0 |
| 16 | 60 | 51 | 10 | 5.9 | 4.9 |
| 17 | 60 | 51 | 12 | 4.9 | 4.1 |
| 18 | 50 | 42 | 11 | 4.4 | 3.7 |
| 19 | 47 | 40 | 12 | 4.0 | 3.3 |
| 20 | 44 | 37 | 12 | 3.5 | 3.0 |
| 21 | 34 | 28 | 13 | 2.5 | 2.1 |
| 22 | 27 | 23 | 14 | 1.9 | 1.6 |
| 23 | 32 | 27 | 17 | 1.9 | 1.6 |
| 24 | 19 | 16 | 14 | 1.4 | 1.1 |
| 25 | 21 | 18 | 28 | 0.8 | 0.6 |
| 26 | 54 | 45 | 10 | 5.2 | 4.4 |
| 27 | 64 | 54 | 21 | 3.1 | 2.6 |
| 28 | 47 | 40 | 10 | 4.6 | 3.8 |
| 29 | 40 | 34 | 10 | 3.9 | 3.3 |

The following can be understood from the above results. (1) With resins in which pigment particles were dispersed, though the results are influenced by the pigment species, the average particle diameter and added amount thereof, the smaller the degree of dispersion R of the pigment particles (that is, the more uniformly the pigment particles are dispersed in the main component matrix comprised of resin), the greater the transmittance Ti value in the infrared range and the smaller the visible light transmittance Tv value. As a result, a comparison of resins prepared from powders of the same mixture composition shows that the Ti/Tv value (the ratio of the transmittance of light of infrared range wavelengths to the transmittance of visible light of 830nm wavelength), which is an index of the level of performance of selective transmission of infrared rays, increases significantly and the raw material thus becomes more preferable as the coating material for the lens of ceramic infrared sensor as the R becomes low (last indication in the previous paragraph). (2) In order to secure high uniform dispersion of the pigment particles in the resin matrix and to make a small value of R, the average particle diameter of the pigment particles is preferably controlled to be in the range of 0.01 *µ*m to less than or equal to the lower limit of the wavelength range of practical use (samples 15 to 22). (3) For the same reasons, the total amount of pigment added, though depending on the pigment species, is preferably controlled for example to be within the range of approximately 0.05 to 2 mass % (samples 3 to 8). (4) If the total added amount is the same, the lowering of the transmittance Ti can be restricted to a smaller degree with a combination of black and white pigments than with the addition of only a black pigment (sample 2 and samples 9 to 15). Also, this trend becomes significant when the ratio B/A of the amount of the white pigment to the black pigment is in the range of 1 to 15.

### Example 3

Several of the ceramic raw materials prepared in Example 1 and the resin layer raw material prepared in Example 2 were selected and lens bodies for infrared sensor were prepared using the combinations indicated in Table 5. The ceramic and the material of the resin layer that is coated on the light receiving surface were combined as indicated in the "Lens arrangement" column of the Table. The numbers indicated in the "Ceramic raw material" column are the same raw material numbers as those of the ceramic raw materials indicated in Table 1, and the numbers indicated in the raw material column of "Coated resin layer" are the same raw material numbers as those of the resin raw materials indicated in Table 3. The size of the ceramic parts of the lenses is the same as that of Example 1. Entire surfaces were mirror polished and all samples were finished to a thickness of 3mm. With each sample, a resin layer comprising the corresponding resin raw material and of the average thickness indicated in Table 5, was coated on one of the principal surfaces. Each resin layer was formed with the corresponding average thickness using grains, comprising the corresponding raw materials and were mixed and kneaded in the same manner as in Example 2. The same method as that shown schematically in Fig. 5 was used as the forming method. More specifically, test pieces of the finished ceramic raw materials were placed inside a mold as shown in the Figure, the surroundings of the test pieces were filled with the required amounts of the corresponding resin raw material grains, and injection molding was performed upon raising the temperature to the softening point. As with Example 1, each of the lens body samples that were coated with resin was checked for the linear transmittance in the thickness direction in the infrared range and visible range. The actual measurement wavelength band for the infrared transmittance Ti was 8 to 12 *µ*m in the case of samples 1 through 12 and 3 to 5 *µ*m for sample 13 onwards. The results are shown in Table 5. The indication method used in this Table is the same as that of Tables 1 through 4.

**Table 5**

| Lens arrangement | | | | Average transmittance(%) | | |
|---|---|---|---|---|---|---|
| No. | Ceramic raw material | Coated resin layer | | Infrared range Ti (%) | Visible range Tv (%) | Ti/Tv |
| | | Raw material | Average thickness (*µ* m) | | | |
| 1 | 2 | 1 | 20 | 64.6 | 0.0155 | 4177 |
| 2 | 2 | 1 | 30 | 64.2 | 0.0150 | 4247 |
| 3 | 2 | 1 | 50 | 63.3 | 0.0141 | 4474 |
| 4 | 2 | 1 | 100 | 61.0 | 0.0122 | 5015 |
| 5 | 2 | 1 | 110 | 60.6 | 0.0118 | 5130 |
| 6 | 2 | 2 | 50 | 33.3 | 0.00337 | 9889 |
| 7 | 2 | 12 | 50 | 51.9 | 0.00267 | 19438 |
| 8 | 12 | 1 | 50. | 30.4 | 8.27×10⁻⁶ | 3.68×10⁶ |
| 9 | 12 | 2 | 50 | 16.7 | 2.36×10⁻⁶ | 7.08×10⁶ |
| 10 | 12 | 12 | 50 | 24.0 | 1.87×10⁻⁶ | 1.28×10⁷ |
| 11 | 18 | 2 | 50 | 45.2 | 2.47 | 18.3 |
| 12 | 18 | 12 | 50 | 64.9 | 1.96 | 33.1 |
| 13 | 19 | 12 | 50 | 48.6 | 0.0155 | 3138 |
| 14 | 21 | 1 | 50 | 63.1 | 0.110 | 576 |
| 15 | 21 | 2 | 50 | 33.3 | 0.0312 | 1066 |
| 16 | 21 | 12 | 50 | 50.4 | 0.0248 | 2033 |
| 17 | 28 | 1 | 50 | 72.7 | 9.70 | 7.50 |
| 18 | 28 | 2 | 50 | 38.4 | 2.76 | 13.9 |
| 19 | 28 | 12 | 50 | 55.1 | 2.19 | 25.2 |
| 20 | 30 | 2 | 50 | 29.2 | 0.166 | 176 |
| 21 | 30 | 12 | 50 | 42.0 | 0.132 | 318 |

The following can be understood from the above results. That is, (1) when a resin layer without the addition of pigment is formed on the same ceramic that contains pigment, the infrared light transmittance Ti decreases gradually with the thickness of the resin layer. Meanwhile, the visible light transmittance Tv decreases even more greatly with the thickness of the resin layer. The Ti/Tv value thus changes more greatly than Ti (samples 1 to 5). (2) In comparison to the case where only a black pigment is added to the resin layer, both the Ti and Ti/Tv are increased by the combined addition of white pigment if the layer thickness is the same (for example, samples 6 and 7). (3) When a resin layer to which pigment has been added is used, though the Ti decreases, since the decrease of Tv is considerable, the effect of increasing the Ti/Tv value is large. In this case, the decrease of Ti can be made small by the combined use of black and white pigments (for example, samples 8 to 10).

### Example 4

Main lens bodies comprising only the ceramics of sample 2 of Example 1 and main lens bodies comprising raw material combinations of the ceramics and resin layers of sample Nos. 8, 10, 17, and 19 of Example 3 (Table 5) were prepared. These were connected and fixed to supporting members comprising metal or the same resin raw material as the resin layer to prepare the sensor assemblies of the respective arrangements shown in Table 6. In this Table, the indications of the "Combination of lens raw materials" correspond to the abovementioned sample classifications.

Lenses comprising ceramics were processed to have a hat-like outer shape such as shown in Fig. 2. The principal surface that was to become the light receiving surface was mirror-finished to a convex spherical shape with a radius of curvature of 5.7mm. Here, the height, from the upper surface of the collar part, of the thickest part of the convex spherical shaped part was made 3mm. The other principal surface that was to be connected to the supporting part was finished to a flat surface with surface roughness Ra, as defined in JIS B0 601, of 0.5 *µ*m. The diameter of this flat surface was 10mm and the thickness of the collar part formed by the spherical surface and the flat surface was 1.5mm. With samples with which a resin layer was coated on the light receiving surface, the thickness of this layer was made 50 *µ*m.

The same high density polyethylene resin as that of the resin layer coated on the ceramic light receiving part, kovar (trade name), SUS 304 stainless steel, and S45C steel, were prepared as raw materials for the supporting part. In the case of a resin supporting part, the supporting part was made to have the shape shown in (5) of Fig. 3 in which the resin layer coated on the lens and the supporting part of the same material are made integral. In this case, a mold such as that shown in Fig. 6 was used to directly connect the lens body and the supporting part by injection molding. With some of such samples, a cylindrical part, which was formed to be integral to the supporting part, was provided on the inner side of the supporting part at the same time the supporting part was formed, and a detection part was fixed to the bottom of the cylindrical part as shown in (1) of Fig. 7. In cases where the supporting part was made of metal, the supporting part was made to have one of the shapes shown in (1) to (4) of Figs. 3 and 4 and the lens body was connected to the supporting part via the layer indicated in the "Arrangement of the connecting layer" column of Table 6. The order of disposition of the respective layers of the connecting layer in this column is indicated in a manner such that the leftmost side is the lens side and the rightmost side is the supporting part side. The thermal expansion coefficient of the ceramic lens at room temperature is approximately 6.9 × 10⁻⁶/° C in the case of a lens having zinc sulfide (ZnS) as the main component and approximately 6.7 × 10⁻⁶/° C in the case of a lens having spinel as the main component. The thermal expansion coefficients of kovar, SUS304, and S45C steel are approximately 5.4, 9.9, and 14, respectively, in units of [× 10⁻⁶/° C]. The thermal expansion coefficient of high density polyethylene is approximately 80 × 10⁻⁶/° C.

With all samples, the supporting part was formed to have external dimensions of approximately 24mm in outer diameter and 7.65mm in height. With items classified under "Integral" in the "Connection type" column of Table 6, the supporting part was formed integrally using the same resin as the coating layer of the lens, with items under "With cylindrical part", the cylindrical part was also formed integrally using the same resin, and with items under "Glass connection", the lens and the supporting part were connected in the following manner. That is, a nickel plating layer of 3 *µ*m thickness was formed on the entire surface of the cobal supporting part in advance. Thereafter an aqueous paste of a boron oxide - lead oxide type oxide glass was applied between the already plated layer and the lens, and the lens was placed on a predetermined position of the supporting part and connected and fixed by heating to 500°C in air. With items classified under "Soldered", a nickel plating layer of 3 *µ*m thickness was formed on the entire surface of the supporting part and the part of the lens to be connected with the supporting part. Thereafter, an Sn-Pb type solder foil was sandwiched between the supporting part and the lens and these parts were connected by heating to 200° C. With items classified under "Adhered", the two parts were connected directly using a two-liquid type epoxy adhesive agent (trade name : AF-163-2K, made by Sumitomo 3M Inc.). With samples 4 and 5 under "Silver brazing", the connection was made by sandwiching a silver brazing foil of the BAG1 type as defined by JIS between the nickel plated surfaces of the lens and the supporting part and heating to 800° C. With sample 6, the two parts were connected directly using the same silver brazing material and without forming plated layers. The thermal expansion coefficients of the glass, epoxy adhesive agent, solder, and silver brazing material at room temperature are approximately 6.5, 100, 24.7, and 19.6 in units of [× 10⁻⁶/° C]. 50 each of the respective assemblies were thus prepared.

For the respective assembly samples that were prepared, 100% checks of the degree of sealing of the connection were first performed using the above-described procedure illustrated in Fig. 2. The results are shown in the column under "Degree of sealing" in Fig. 6. Each value in this column is a helium gas leak velocity P and the maximum value for 50 items is indicated in units of [× 10⁻⁴Pa·cm³/sec]. Also, 10 items were taken from each sample and these were subject to a thermal cycle test with which the cooling and heating cycle of maintaining a sample for 30 minutes under -40° C and then maintaining the sample for 30 minutes under 125° C was repeated 1000 times. The pass/fail of this test was judged by checking the amount of change Δ P of the degree of sealing before and after the test. The results are shown in the "Thermal cycle" column of Table 6. In this column, ○ indicates when the ΔP in units of [x 10⁻⁴Pa·cm³/sec] was less than 1, the Δ indicates when the ΔP was 1 to 10, and the × indicates when the ΔP exceeds 10.

The following can be understood from the above results. (1) With a metal supporting part, it is most preferable to plate both connection interfaces and to connect the lens using a low-melting-point glass or solder. If a brazing material is used in this case, the thermal cycle reliability will be low in comparison to cases where glass or solder is used. However, the thermal cycle reliability is also low when the difference of thermal expansion coefficients is large or when a direct connection is made without plating (samples 3 to 6). (2) With an assembly that has been made integral using a resin and without using a connecting layer, though the degree of sealing does not present a problem in terms of practical use, it is somewhat poor in comparison to cases where the connection is made by glass or solder via a metal plating layer. There were no problems in terms of thermal cycle reliability (for example, samples 1 and 2). This also applies likewise to cases where a metal supporting part and the lens are connected directly using an adhesive agent (for example, sample 7).

**Table 6**

| No | Combination of lens raw material | Raw material of supporting part | Connection type | Arrangement of connecting layer | Reliability of connection | |
|---|---|---|---|---|---|---|
| | | | | | Degree of sealing P | Thermal cycle |
| 1 | Sample 2 of Example 1 | HPE | Integral | No connecting layer | 2 | ○ |
| 2 | Same as above | Same as above | Integral With cylindrical part | No connecting layer | 2 | ○ |
| 3 | Same as above | kovar | Glass connection | Plating/glass/ plating | <1 | ○ |
| 4 | Same as above | Same as above | Silver brazing connection | Plating / silver brazing / plating | <1 | Δ |
| * 5 | Same as above | SUS304 | Same as above | Same as above | <1 | × |
| * 6 | Same as above | S45C | Same as above | Silver brazing | <1 | × |
| 7 | Same as above | Same as above | Adhered | Epoxy adhesive agent | 2 | ○ |
| 8 | Same as above | Same as above | Soldered | Plating / soldered / plating | <1 | ○ |
| 9 | Sample 8 of Example 3 | HPE | Integral | Without interposed layer | 2 | ○ |
| 10 | Same as above | Same as above | Integral With cylindrical part | No connecting layer | 2 | ○ |
| 11 | Same as above | kovar | Glass connection | Plating / glass / plating | <1 | ○ |
| 12 | Same as above | Same as above | Adhered | Epoxy adhesive agent | 2 | ○ |
| 13 | Same as above | Same as above | Soldered | Plating / soldered / plating | <1 | ○ |
| 14 | Sample 10 of Example 3 | HPE | Integral With cylindrical part | No connecting layer | 2 | ○ |
| 15 | Same as above | Same as above | Soldered | Plating / soldered / plating | <1 | ○ |
| 16 | Sample 17 of Example 3 | HPE | Integral | No connecting layer | 2 | ○ |
| 17 | Same as above | Same as above | Integral With cylindrical part | No connecting layer | 2 | ○ |
| 18 | Same as above | kovar | Glass connection | Plating / glass / plating | <1 | ○ |
| 19 | Same as above | Same as above | Adhered | Epoxy adhesive agent | 2 | ○ |
| 20 | Same as above | Same as above | Soldered | Plating / soldered / plating | <1 | ○ |
| 21 | Sample 19 of Example 3 | HPE | Integral With cylindrical part | No connecting layer | 2 | ○ |
| 22 | Same as above | Same as above | Soldered | Plating / soldered / plating | <1 | ○ |

Examples marked with * are comparative examples. The unit for the degree of sealing is [x 10⁻⁴Pa·cm³/sec].

## Claims

1. A ceramic infrared sensor has a lens body (1), comprising a ceramic part, a supporting part (3), which supports said lens body (1), and a detection part (2), which detects the light that has been transmitted through said lens body (1),
**characterized in that**
a pigment that shields visible light is contained in the ceramic part of said lens body (1).

2. A ceramic infrared sensor as set forth in claim 1, wherein the lens body (1) comprises in addition to the ceramic part a resin layer that covers at least the light receiving surface of the ceramic part, and wherein the pigment is only contained in the ceramic part of said lens body (1).

3. A ceramic infrared sensor as set forth in claim 1, wherein the lens body (1) comprises in addition to the ceramic part a resin layer that covers at least the light receiving surface of the ceramic part, and wherein the pigment that shields visible light is also contained in the resin layer of said lens body (1).

4. A ceramic infrared sensor as set forth in claim 1, 2 or 3, wherein the linear transmittance of light of 8 to 12µm wavelength of said lens body (1) is 50% or more.

5. A ceramic infrared sensor as set forth in claim 4, wherein the main component of said ceramic is zinc sulfide (ZnS).

6. A ceramic infrared sensor as set forth in claim 1, 2 or 3, wherein the linear transmittance of light of 3 to 5µm wavelength of said lens body (1) is 50% or more.

7. A ceramic infrared sensor as set forth in claim 6, wherein the main component of said ceramic is spinel (MgAl₂O₄).

8. A ceramic infrared sensor as set forth in any of claims 1 through 7, wherein said supporting part (3) is comprised of resin.

9. A ceramic infrared sensor as set forth in claim 8, wherein said supporting part (3) is made integral with said resin layer.

10. A ceramic infrared sensor as set forth in any of claims 1 through 7, wherein said supporting part (3) is comprised of metal.

11. A ceramic infrared sensor as set forth in any of claims 2 through 10, wherein the main component of said resin layer is polyethylene.

12. A ceramic infrared sensor as set forth in claim 11, wherein said polyethylene is high-density polyethylene.

13. A ceramic infrared sensor as set forth in any of claims 1 through 12, wherein said supporting part (3) includes a cylindrical part (7), which is formed between the portion of said lens body (1) that transmits light and said detection part (2).

## Patentansprüche

1. Ein Keramik-Infrarotsensor weist einen Linsen-Körper (1) mit einem Keramikteil auf, sowie ein Unterstützungsteil (3), das den Linsen-Körper (1) unterstützt und ein Detektionsteil (2), das das Licht detektiert, das durch den Linsen-Körper (1) durchgegangen ist,
**dadurch gekennzeichnet, dass**
ein sichtbares Licht abschirmendes Pigment in dem Keramikteil des Linsen-Körpers (1) enthalten ist.

2. Ein Keramik-Infrarotsensor nach Anspruch 1, wobei der Linsen-Körper (1) zusätzlich zu dem Keramikteil eine Harzschicht umfasst, die mindestens die Lichtempfangsfläche des Keramikteils bedeckt, und wobei das Pigment nur in dem Keramikteil des Linsen-Körpers (1) enthalten ist.

3. Ein Keramik-Infrarotsensor nach Anspruch 1, wobei der Linsen-Körper (1) zusätzlich zu dem Keramikteil eine Harzschicht bzw. Kunstharzschicht umfasst, die mindestens die Lichtempfangsfläche des Keramikteils bedeckt, und wobei das sichtbare Licht abschirmende Pigment auch in der Harzschicht des Linsen-Körpers (1) enthalten ist.

4. Ein Keramik-Infrarotsensor nach Anspruch 1, 2 oder 3, wobei der lineare Transmissionsgrad von Licht mit einer Wellenlänge von 8 bis 12*µ*m des Linsen-Körpers (1) 50% oder mehr ist.

5. Ein Keramik-Infrarotsensor nach Anspruch 4, wobei die Hauptkomponente der Keramik Zinksulfid (ZnS) ist.

6. Ein Keramik-Infrarotsensor nach Anspruch 1, 2 oder 3, wobei der lineare Transmissionsgrad von Licht mit einer Wellenlänge von 3 bis 5*µ*m des Linsen-Körpers (1) 50% oder mehr ist.

7. Ein Keramik-Infrarotsensor nach Anspruch 6, wobei die Hauptkomponente der Keramik Spinel (MgAl₂O₄) ist.

8. Ein Keramik-Infrarotsensor nach irgendeinem der Ansprüche 1 bis 7, wobei der Unterstützungsteil (3) Harz umfasst.

9. Ein Keramik-Infrarotsensor nach Anspruch 8, wobei das Unterstützungsteil (3) zusammenhängend mit der Harzschicht hergestellt ist.

10. Ein Keramik-Infrarotsensor nach einem der Ansprüche 1 bis 7, wobei das Unterstützungsteil (3) Metall umfasst.

11. Ein Keramik-Infrarotsensor nach einem der Ansprüche 2 bis 10, wobei die Hauptkomponente der Harzschicht Polyethylen ist.

12. Ein Keramik-Infrarotsensor nach Anspruch 11, wobei das Polyethylen ein Polyethylen hoher Dichte ist.

13. Ein Keramik-Infrarotsensor nach einem der Ansprüche 1 bis 12, wobei das Unterstützungsteil (3) ein zylindrisches Teil (7) enthält, das zwischen dem Teil des Linsen-Körpers (1), der Licht durchlässt und dem Detektionsteil (2) gebildet ist.

## Revendications

1. Capteur infrarouge céramique comportant un corps de lentille (1), comprenant une partie céramique, une partie de support (3), qui supporte ledit corps de lentille (1), et une partie de détection (2), qui détecte la lumière qui a été transmise à travers ledit corps de lentille (1),
***caractérisé en ce que***
un pigment qui protège la lumière visible est contenu dans la partie céramique dudit corps de lentille (1).

2. Capteur infrarouge céramique selon la revendication 1, dans lequel le corps de lentille (1) comprend en plus de la partie céramique, une couche de résine qui couvre au moins la surface de réception de lumière de la partie céramique, et dans lequel le pigment est seulement contenu dans la partie céramique dudit corps de lentille (1) .

3. Capteur infrarouge céramique selon la revendication 1, dans lequel le corps de lentille (1) comprend en plus de la partie céramique, une couche de résine qui couvre au moins la surface de réception de lumière de la partie céramique, et dans lequel le pigment qui protège la lumière visible est également contenu dans la couche de résine dudit corps de lentille (1).

4. Capteur infrarouge céramique selon la revendication 1, 2 ou 3, dans lequel la transmittance linéaire de lumière d'une longueur d'onde de 8 à 12 µm dudit corps de lentille (1) est de 50% ou plus.

5. Capteur infrarouge céramique selon la revendication 4, dans lequel le composant principal de ladite céramique est du sulfure de zinc (ZnS).

6. Capteur infrarouge céramique selon la revendication 1, 2 ou 3, dans lequel la transmittance linéaire de lumière d'une longueur d'onde de 3 à 5 µm dudit corps de lentille (1) est de 50% ou plus.

7. Capteur infrarouge céramique selon la revendication 6, dans lequel le composant principal de ladite céramique est du spinelle (MgAl₂O₄).

8. Capteur infrarouge céramique selon l'une quelconque des revendications 1 à 7, dans lequel ladite partie de support (3) est composée de résine.

9. Capteur infrarouge céramique selon la revendication 8, dans lequel ladite partie de support (3) est constituée de manière intégrée à ladite couche de résine.

10. Capteur infrarouge céramique selon l'une quelconque des revendications 1 à 7, dans lequel ladite partie de support (3) est composée de métal.

11. Capteur infrarouge céramique selon l'une quelconque des revendications 2 à 10, dans lequel le composant principal de ladite couche de résine est du polyéthylène.

12. Capteur infrarouge céramique selon la revendication 11, dans lequel ledit polyéthylène est du polyéthylène haute densité.

13. Capteur infrarouge céramique selon l'une quelconque des revendications 1 à 12, dans lequel ladite partie de support (3) comprend une partie cylindrique (7), qui est formée entre la partie dudit corps de lentille (1) qui transmet la lumière et ladite partie de détection (2).
